# EUROPEAN PATENT SPECIFICATION

(11) **EP 1 950 264 B1**
(45) Date of publication and mention of the grant of the patent: **09.09.2015**
(21) Application number: 07250268.5
(22) Date of filing: 23.01.2007
(51) Int. Cl.: A47L 25/00, C09J 7/02

(54) **Adhesive tape roll**
Klebebandrolle
Bande adhésive

(43) Date of publication of application: 30.07.2008
(73) Proprietor: Kabushiki Kaisha Nitoms, Tokyo (JP)
(72) Inventor: Kawada, Tsutomu, c/o Kabushiki Kaisha Nitoms, Chuo-ku Tokyo (JP); Sakashita, Teiji, c/o Kabushiki Kaisha Nitoms, Chuo-ku Tokyo (JP); Kakita, Tomio, c/o Kabushiki Kaisha Nitoms, Chuo-ku Tokyo (JP); Taguchi, Satoshi, c/o Kabushiki Kaisha Nitoms, Chuo-ku Tokyo (JP); Noma, Hiroyuki, c/o Kabushiki Kaisha Nitoms, Chuo-ku Tokyo (JP)
(74) Representative: Hallybone, Huw George

(56) References cited:
- WO-A-02/08067
- WO-A-03/002681
- JP-U- S61 180 665
- US-A1- 2002 179 237
- US-A1- 2006 003 129

## Description

### TECHNICAL FIELD

The present invention relates to an adhesive tape roll for cleaning which is wound in a roll shape so that an adhesive surface faces a right side, and more specifically, to a technique of producing an adhesive tape roll which provides for both improved functionality of the adhesive tape and reduced production cost.

### BACKGROUND ART

As shown in, for example, Patent Document 1 (Japanese Utility Model Application No. 2521127), an adhesive tape roll for cleaning is formed by winding an adhesive tape with an adhesive surface formed on one surface of a band-shaped base material in a roll shape so that its adhesive surface faces a right side, and by fitting it to an exclusive fixture (see FIG. 3B in Patent Document 1) and rolling it with its adhesive surface in contact with a surface to be cleaned such as a floor, dust on the surface to be cleaned can be caught with the adhesive surface.

The other surface (non-adhesive surface) of the base material is provided with a laminate film for reinforcing the base material, and further under it, a release treatment surface coated with a release material such as a silicon resin is provided. The release treatment surface is a contact surface with which the adhesive surface of the adhesive tape on the lower layer is in contact when the adhesive tape is stacked into a roll shape, and is provided so that the base material is not broken by the adhesive surface on the lower layer when the adhesive tape on the outermost layer is peeled off.

However, conventionally, the release treatment surface has to be always provided to stack the adhesive tape. Therefore, the material cost and the production cost have been high correspondingly. Further, if the rewinding force (the resistance force when rewound) is too small, the rewinding force is surpassed by the adhesion between the adhesive tape and the floor surface when the adhesive tape roll is rolled on the floor surface, and a so-called railing phenomenon in which the adhesive tape sticks to the floor surface is sometimes caused. Thus, care is required in the design of the release treatment surface.

US 2006/003129 discloses a roll of contaminant removal tape defining opposing longitudinal ends, opposing side edges, and opposing major surfaces. The tape is wound into a roll and includes a backing layer, an adhesive layer, a plurality of lines of perforations, and a set of discrete non-adhesive zones.

### SUMMARY OF THE INVENTION

The present invention provides an adhesive tape roll, as defined in claim 1.

The present invention is made for solving the above described problem, and an object of the present invention is to provide an adhesive tape roll at lower cost without reducing its cleaning ability.

In order to attain the above described object, the present invention includes several characteristics shown as follows. Namely, in an adhesive tape roll which is formed by winding an adhesive tape with an adhesive surface formed on one surface of a base material so that its adhesive surface faces a right side, the present invention is characterized in that the above described adhesive surface is provided with release means with respect to the other surface of the above described base material.

An adhesive material layer forming the above described adhesive surface is provided on one surface of the above described base material and a release material layer as the above described release means is partially provided on the above described adhesive layer.

According to this, as a result that the release means with the release material layer formed on the adhesive surface is provided, the release treatment surface as in the conventional tape roll does not have to be provided on the other surface of the base material, and the adhesive tape roll can be produced at lower cost.

The above described release material layer is characterized by having an occupation ratio with respect to the above described adhesive surface per unit area of 5% or more and 50% or less.

According to this, when the occupied area of the release material layer is less than 5%, the area of the release material layer is too small. Therefore, the base material and the adhesive surface stick to each other, and there is the fear of occurrence of base material breakage when it is peeled off. When the occupied area is larger than 50% on the other hand, contact of the adhesive surface and the surface to be cleaned is inhibited, and therefore, there is not only the fear of reduction in cleaning ability but also the fear of causing a railing phenomenon.

Preferably, the above described release material layer is characterized by being provided in a line shape, a lattice shape, a wave shape and/or a dot shape.

According to this, by providing the release material layer in the line shape, the dot shape or the wave shape, the adhesive action and the release action can be evenly distributed.

The above described release material layer is characterized by being composed of a synthetic resin material of rubber as a main component.

According to this, since the release material layer is composed of rubber as the main component, not only the release action can be effectively kept, but also dust entering the uneven surface can be reliably captured by generating proper cushioning properties at the time of cleaning.

The above described release material layer is preferably characterized by having a width of 1 mm or less, and thickness of 30 to 120 µm.

According to this, if the width of the release layer is larger than 1 mm, contact of the adhesive surface and the surface to be cleaned is inhibited, and therefore, there is the fear of excessively reducing the adhesion. When the thickness is smaller than 30 µm, the adhesive surface sticks to the base material on the upper layer too firmly, and therefore, there arises the fear of causing breakage of the base material. When it is larger than 120 µm on the other hand, there arises the fear that the adhesion reduces too much.

The above described release material layer is characterized by including very small adhesiveness having a holding force necessary for supporting at least the other surface of the above described base material which is opposed thereto.

According to this, the release material layer includes very small adhesiveness having the holding force necessary for supporting the other surface of the base material, and thereby, the railing phenomenon, which occurs as a result of losing the balance of the adhesion to the surface to be cleaned and the rewinding force, can be prevented.

### BRIEF DESCRIPTION OF THE DRAWINGS

FIG. 1 is a perspective view of an adhesive tape roll according to one embodiment of the present invention;
FIG. 2 is a sectional view of the adhesive tape taken along line A-A;
FIG. 3 is a graph showing the variation per day of the rewinding force of the adhesive tape; and
FIG. 4 is a graph showing the changes in adhesion of the adhesive material and the release material.

### DETAILED DESCRIPTION

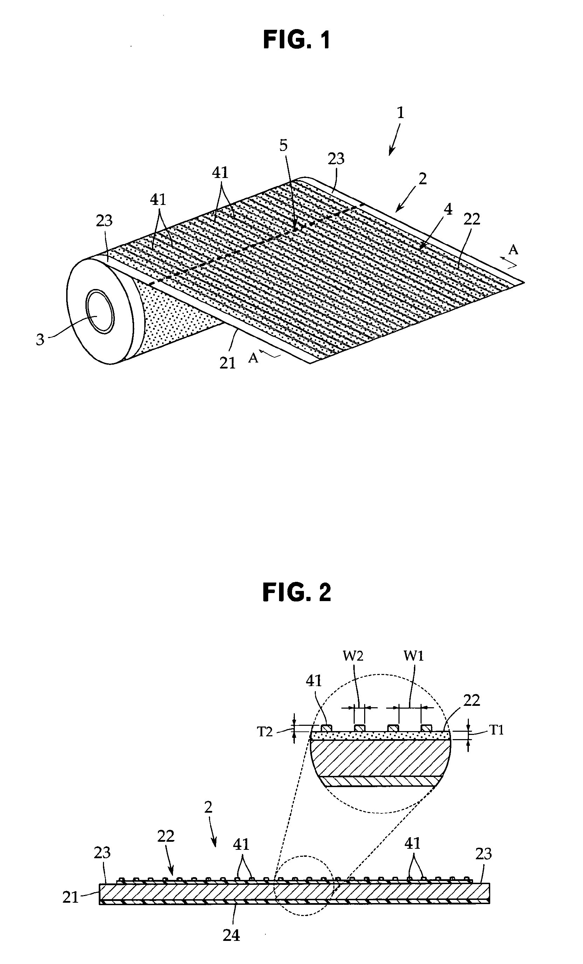

Next, an embodiment of the present invention will be described with reference to the drawings, but the present invention is not limited to this. FIG. 1 is a perspective view of an adhesive tape roll according to one embodiment of the present invention, and FIG. 2 is a sectional view taken along line A-A of it.

An adhesive tape roll 1 is constituted of what is made by winding an adhesive tape 2 with an adhesive surface 22 formed on one surface of a tape-shaped base material 21 in a roll shape along a core 3 so that its adhesive surface 22 faces a right side (top surface side in FIG. 1).

A core made of cardboard is usually used for the core 3, but other materials than this, such as a synthetic resin may be used. A so-called coreless type in which only the adhesive tape 2 is wound into a roll shape without using the core 3 may be adopted, and in the present invention, the core 3 is strictly an optional component.

The base material 21 is made of, for example, paper, and as shown in FIG. 2, the adhesive surface 22 coated with an adhesive material is formed on one surface (front surface). In this example, the adhesive agent is composed of an SIS (styrene-isoprene-styrene) adhesive material to which various additive agents such as tackifier, naphthene oil and an age resistor is added, but the kind of the adhesive material may be selected optionally from strong adhesiveness, weak adhesiveness and the like in accordance with the surface to be cleaned (for example, flooring, a carpet or the like) for which it is used. A resin film and a non-woven fabric may be used other than paper as the material of the base material 21.

The adhesive surface 22 is constituted of an adhesive material layer with one surface of the base material 21 coated with an adhesive material all over with a uniform thickness T1, and in this example, the adhesive material is coated so that the thickness T1 of the adhesive material layer becomes 15 to 20 µm.

Non-adhesive portions (dry edges) 23 and 23 which are not coated with the adhesive material are provided at both ends of the adhesive surface 22 of the base material 21, and in this embodiment, non-adhesive portions 23 and 23 are strictly optional components.

Release means 4 is provided on the adhesive surface 22 so that the adhesive tape 2 on the upper layer side and the adhesive tape 2 on the lower layer side do not stick to each other. As shown in FIG. 2, the release means 4 has release material layers 41 formed in streak shapes in parallel along the feeding direction of the adhesive tape 2 on the adhesive surface 22, and a number of them are disposed with predetermined spaces (space W1 = 1.7 mm in this example).

The release material layer 41 preferably has a width W2 of 1 mm or less and a thickness T2 of 30 to 120 µm. Namely, if the width of the release material layer 41 is larger than 1 mm, there is the fear of the adhesion reduces too much. If the thickness of the release material layer 41 is smaller than 30 µm, the adhesive surface sticks to the base material on the upper layer too firmly to cause the fear of occurrence of breakage of the base material. If it is larger than 120 µm on the other hand, there is the fear that adhesion reduces too much.

In this embodiment, the release material layer 41 is formed into the streak shape along the feeding direction of the adhesive tape 2, but other than this, it may be in a lattice shape, or may be provided to scatter in a dot form, for example. Namely, as long as the occupation ratio to the adhesive surface 22 per unit area is 5% or more and 50% or less (more preferably, 10% or more and 30% or less), the form thereof may be optional in accordance with the specifications.

According to the above, when the occupied area of the release material layer 41 is less than 5%, the release material layer 41 is too small, the base material sticks to the adhesive surface, and when it is peeled off, base material breakage may be caused. If it is larger than 50% on the other hand, there arises not only the fear of reducing the cleaning ability since the adhesion to the surface to be cleaned is too small, but also the fear of causing a railing phenomenon.

In this example, the release material layer 41 is constituted of a rubber material such as, for example, CEBC (olefin crystal: ethylene: butylene: olefin crystal block copolymer) as a main component, which is doped with a very small amount of an SIS polymer to enhance affinity with the adhesive surface 22, and is further doped with various additives such as tackifier and paraffin oil.

In this example, the release material layer 41 obtains slight adhesiveness by using the additive such as paraffin oil, but other than this, it may use a mechanical method such as microbaloon mixing, and mechanical foaming using N₂ gas or CO₂ gas. Further as other methods, mixing of elastic powder, doping an acrylic pressure sensitive adhesive material with a plasticizer and the like may be adopted.

A laminated film 24 for reinforcing the base material 21 is provided on the other surface (back surface) of the base material 21. In this example, the laminated film 24 is composed of a thin film of polyethylene, and is integrally provided on the base material 21. The laminated film 24 may not be used by controlling the adhesiveness of the release material layer 41. In the case of the base material 21 of a plastic film, the laminated film 24 is not required.

Referring to FIG. 1 again, the adhesive tape 2 is provided with a cut line 5 for cutting at substantially each lap length. In the present invention, the cut line 5 refers to cutting means which is used for cutting the adhesive tape 2 along the width direction, and includes, for example, arrangement of long holes or wave-shaped slits, and intermittent slits such as perforation.

In this embodiment, the cut line 5 is provided substantially parallel with and along the width direction of the adhesive tape 2, but other than this, it may be formed in the oblique direction. Further, it may be a short cut line to be a starting point of cutting provided at a part of the end portion of the adhesive tape 2.

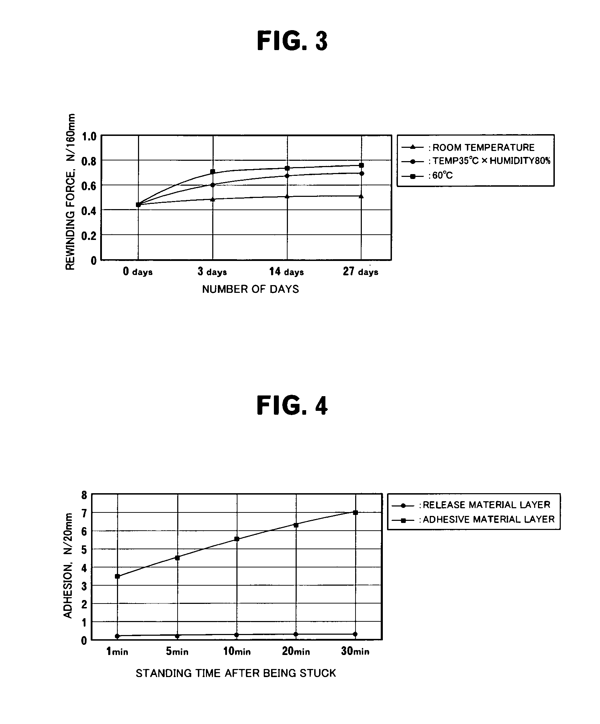

Next, the concrete characteristics of the release material layer 41 will be described. FIG. 3 is a graph showing the variation per day of the rewinding force of the release material which composes the release material layer 41, and Table 1 is the table which summarizes the evaluation result.

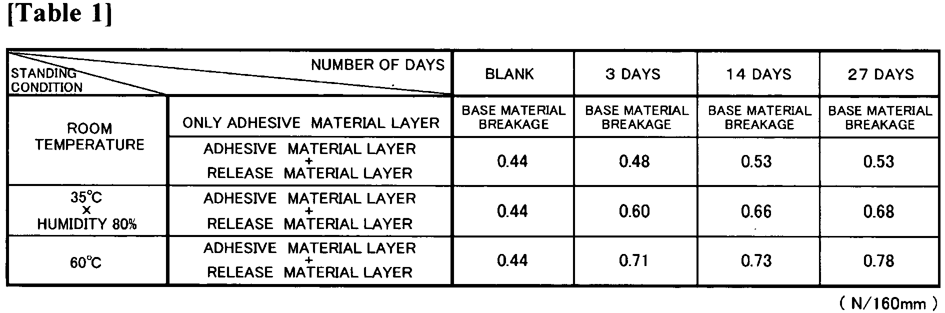

The rewinding force means the adhesion in the interface between the adhesive surface 22 and the non-adhesive surface (surface of the laminated film 24). In this example, the adhesive tape composed similarly to FIG. 1 was prepared, and was left standing at each temperature for predetermined days, and thereafter, its rewinding forces were measured.

Comparing the release material and the adhesive material about the rewinding force, in the case with only the adhesive material, the adhesive material completely stuck to the base material, and when it is peeled off, base material breakage was caused. On the other hand, the adhesive tape including the release material layer can permanently obtain the stable rewinding force at a room temperature, an intermediate temperature (35°C) and a high temperature (60°C), and by providing it on the adhesive layer, sufficient release action can be obtained. Since in the case with only the adhesive material, adhesiveness onto the base material back surface is strong, and base material breakage occurs from the blank, it is not shown in each graph.

Next, Fig. 4 is a graph showing changes in the adhesion of the release material and the adhesive material, and Table 2 is the table of the summary of the evaluation result.

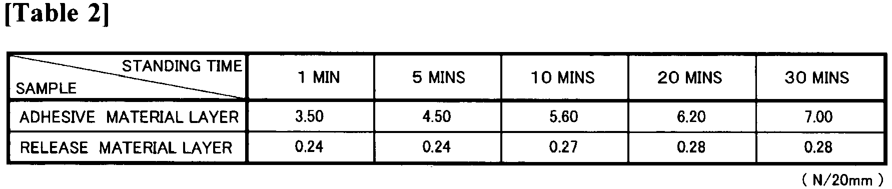

The adhesion means the interface adhesion between the adhesive surface and the contact surface, and in this example, it means peel adhesion at 180° in conformity with JIS (Japanese Industrial Standards) - Z0237 after the adhesive tape is stuck to a stainless plate and is left for a predetermined time.

According to this, it is found out that since the adhesive material is generally of a pressure sensitive type, the adhesiveness gradually increases after being stuck thereto, but the release material always keeps a substantially constant small adhesive state, and a sufficient release effect with respect to the base material is obtained.

In this example, the adhesive tape 2 is wound in the roll shape, but may be provided to stack, for example, sheet bodies, and as long as the adhesive tapes have the structure in which the bottom surface of the self-propelled adhesive tape is stacked on the adhesive surface of the adhesive tape, the present invention is applicable to the adhesive tapes in all forms.

## Claims

1. An adhesive tape roll (1) which is formed by winding an adhesive tape (2) with an adhesive surface (22) of an adhesive material layer formed on one surface of a base material (21) so that the adhesive surface (22) faces a right side;
**characterised in that**
a release material layer (41) is provided on part of said adhesive material layer, wherein the release material layer prevents the adhesive material layer from sticking to the next adjacent layer of tape and
wherein said release material layer (41) is composed of a synthetic resin material of rubber as a main component and wherein said release material layer (41) has an occupation ratio with respect to said adhesive surface (22) per unit area of 5% or more and 50% or less, and
wherein the surface of the base material opposite the one surface on which the adhesive material layer is formed is not provided with a release treatment surface.

2. The adhesive tape roll (1) according to claim 1, wherein said release material layer (41) is provided in a line shape, a lattice shape, a wave shape and/or a dot shape.

3. The adhesive tape roll (1) according to claim 1,
wherein said release material layer (41) has a width of 1 mm or less, and a thickness of 30 to 120 µm.

## Patentansprüche

1. Klebebandrolle (1), die durch Aufwickeln eines Klebebands (2) mit einer auf einer Oberfläche eines Grundmaterials (21) gebildeten Klebeoberfläche (22) aus einer Klebstoffmaterialschicht so gebildet ist, dass die Klebeoberfläche (22) zu einer richtigen Seite zeigt;
**dadurch gekennzeichnet, dass**
eine Abziehmaterialschicht (41) auf einem Teil der Klebstoffmaterialschicht bereitgestellt ist, wobei die Abziehmaterialschicht verhindert, dass die Klebstoffmaterialschicht an der nächsten benachbarten Schicht des Bands klebt, und
wobei die Abziehmaterialschicht (41) aus einem synthetischen Harzmaterial aus Gummi als eine Hauptkomponente besteht und wobei die Abziehmaterialschicht (41) ein Besetzungsverhältnis bezogen auf die Klebeoberfläche (22) pro Einheitsfläche von 5 % oder mehr und 50 % oder weniger aufweist, und wobei die Oberfläche des Grundmaterials, die der einen Oberfläche gegenüber liegt, auf der die Klebstoffmaterialschicht gebildet ist, nicht mit einer Abziehbehandlungsoberfläche versehen ist.

2. Klebebandrolle (1) gemäß Anspruch 1, wobei die Abziehmaterialschicht (41) in einer Linienform, einer Gitterform, einer Wellenform und/oder einer Punktform bereitgestellt ist.

3. Klebebandrolle (1) gemäß Anspruch 1,
wobei die Abziehmaterialschicht (41) eine Breite von 1 mm oder weniger und eine Dicke von 30 bis 120 µm aufweist.

## Revendications

1. Rouleau de bande adhésive (1) qui est formé en enroulant une bande adhésive (2) présentant une surface adhésive (22) constituée d'une couche de matière adhésive formée sur une surface d'une matière de base (21) de telle sorte que la surface adhésive (22) soit face à un côté droit;
**caractérisé en ce que**:
une couche de matière de séparation (41) est prévue sur une partie de ladite couche de matière adhésive, dans lequel la couche de matière de séparation empêche la couche de matière adhésive de se coller à la couche de bande adjacente suivante, et
dans lequel ladite couche de matière de séparation (41) est composée d'une matière de résine synthétique de caoutchouc comme composant principal, et dans lequel ladite couche de matière de séparation (41) présente un taux d'occupation par rapport à ladite surface adhésive (22) par unité de surface de 5 %, ou plus, et de 50 %, ou moins, et
dans lequel la surface de la matière de base opposée à la première surface sur laquelle la couche de matière adhésive est formée n'est pas pourvue d'une surface de traitement de séparation.

2. Rouleau de bande adhésive (1) selon la revendication 1, dans lequel ladite couche de matière de séparation (41) est prévue sous la forme d'une ligne, sous la forme d'un treillis, sous la forme d'une onde ou sous la forme de points.

3. Rouleau de bande adhésive (1) selon la revendication 1, dans lequel ladite couche de matière de séparation (41) présente une largeur de 1 mm, ou moins, et une épaisseur comprise entre 30 µm et 120 µm.
